# EUROPÄISCHE PATENTANMELDUNG

(11) **EP 4 159 603 A1**
(43) Veröffentlichungstag der Anmeldung: **05.04.2023**
(21) Anmeldenummer: 22197074.2
(22) Anmeldetag: 22.09.2022
(51) Int. Cl.: B62J 1/08, A47C 3/30

(54) **BETÄTIGUNGSEINRICHTUNG FÜR EIN HÖHENVERSTELLBARES SATTELSTÜTZROHR**

(30) Priorität: 30.09.2021 DE 202021105290 U
(71) Anmelder: Canyon Bicycles GmbH, 56073 Koblenz (DE)
(72) Erfinder: Lawundy, Alexander, 53129 Bonn (DE)
(74) Vertreter: dompatent von Kreisler Selting Werner - Partnerschaft von Patent- und Rechtsanwälten mbB

(57) **Zusammenfassung**

Eine Betätigungseinrichtung für ein höhenverstellbares Sattelstützrohr weist einen Hubmagneten (10) auf. Dieser weist einen von einer Spule (14) umgebenen Magnetkern (12) auf. Der Magnetkern (12) wirkt mit einer Auslöseeinrichtung (26) einer Hubeinrichtung zusammen, wobei es sich bei der Hubeinrichtung beispielsweise um eine pneumatische Hubeinrichtung zur Höhenverstellung des Sattelstützrohres und somit zu der Höhenverstellung des Sattels handelt.

## Beschreibung

Die Erfindung betrifft eine Betätigungseinrichtung für ein höhenverstellbares Sattelstützrohr.

Insbesondere bei Mountainbikes aber auch bei anderen Fahrrädern ist es bekannt, absenkbare Sattelstützen vorzusehen. Derartige Sattelstützen weisen ein Sattelstützrohr auf, das an seinem oberen Ende den Sattel trägt und zweiteilig ausgebildet ist. Ein äußeres Rohr des Sattelstützrohrs ist üblicherweise klemmend mit dem Sattelrohr des Fahrradrahmens verbunden. Innerhalb des äußeren Rohrs des Sattelstützrohrs ist ein inneres Rohr in Längsrichtung verschiebbar. Hierzu ist es bekannt, im Sattelstützrohr, insbesondere den mit dem Sattelrohr des Fahrradrahmens verbundenen Sattelstützrohr, eine Hubeinrichtung vorzusehen. Diese weist beispielsweise eine Spiralfeder auf. Durch Lösen einer Arretiervorrichtung, wie eines Pins oder dergleichen, kann mit Hilfe des Körpergewichts die Feder zusammengedrückt und der Sattel nach unten in eine untere Position bewegt werden. In dieser erfolgt wiederrum ein Einrasten bzw. Halten mit Hilfe einer Arretiervorrichtung oder dergleichen. In dieser unteren Position des Sattels können beispielsweise schwierige Geländepassagen oder dergleichen auf einfache Weise befahren werden. Durch Lösen der Arretierung wird der Sattel mit Hilfe der Feder wieder in die obere Position gedrückt. Bekannt ist es, die Arretiervorrichtung über einen Bowdenzug zu betätigen, so dass eine Betätigung mit Hilfe eines am Lenker angeordneten Hebels oder eines anderen Auslösemechanismus möglich ist. Anstelle des Vorsehens einer Feder als Hubeinrichtung ist es auch möglich, eine pneumatische und/oder hydraulische Hubeinrichtung, gegebenenfalls auch in Kombination mit einer mechanischen Feder vorzusehen. Bei derartigen Betätigungseinrichtungen für höhenverstellbare Sattelstützrohre besteht insbesondere die Problematik, dass der Bowdenzug für die Arretiervorrichtung bzw. die Auslösevorrichtung möglichst im Inneren des Rahmens verlegt werden soll. Insbesondere bei modernen Fahrrädern sind in den Rahmenrohren eine Vielzahl von Zügen, Kabeln und dergleichen angeordnet, so dass der verbleibende Bauraum gering ist. Aufgrund der Höhenverstellung des Sattelstützrohrs erfolgt auch eine Lageänderung des Bowdenzugs, so dass Ausgleichsbögen erforderlich sind. Dies ist bei modernen Fahrrädern aufgrund des geringen Raumangebots nur schwer zu realisieren.

Des Weiteren ist es zur Betätigung der üblicherweise hydraulischen und/oder pneumatischen Hubeinrichtung, die durch ein Sperrventil reguliert wird, bekannt, diese elektrisch zu betätigen. Dies hat den Vorteil, dass kein Bowdenzug vom Lenker zur Betätigungseinrichtung, sondern nur ein elektrisches Kabel verlegt werden muss. Allerdings ist es sodann bei den beispielsweise in EP 2888157 beschriebenen Betätigungsrichtungen erforderlich, einen entsprechenden Elektromotor vorzusehen. Dieser Elektromotor muss sehr stark untersetzt werden, um die erforderliche Kraft aufbringen zu können. Dies führt jedoch zu ungewünschten zeitlichen Verzögerungen, da insbesondere beim Fahren in anspruchsvollem Gelände ein schnelles Öffnen oder Schließen des Sperrventils gewünscht ist. Des Weiteren besteht die Problematik, dass der Bauraum innerhalb des Sattelrohrs sehr begrenzt ist und entsprechend starke Elektromotoren innerhalb des Sattelrohrs nicht angeordnet werden können.

Aufgabe der Erfindung ist es, eine Betätigungseinrichtung für ein höhenverstellbares Sattelstützrohr zu schaffen, mit der auf einfache Weise ein zuverlässiges und vorzugsweise schnelles Betätigen der Hubeinrichtung des höhenverstellbaren Sattelstützrohrs ermöglicht ist.

Die Lösung der Aufgabe erfolgt erfindungsgemäß durch eine Betätigungseinrichtung für ein höhenverstellbares Sattelstützrohr mit den Merkmalen des Anspruchs 1.

Die erfindungsgemäße Betätigungseinrichtung für ein höhenverstellbares Sattelrohr weist erfindungsgemäß einen Hubmagneten auf. Der Hubmagnet umfasst einen Magnetkern, der von einer elektrischen Spule umgeben ist. Mit der Spule ist eine elektrische Schalteinrichtung verbunden. Die elektrische Schalteinrichtung fasst insbesondere ein elektrisches Kabel, das mit einem, vorzugsweise am Lenker angeordneten Schalter verbunden ist. Vorzugsweise erfolgt durch Betätigen der Schalteinrichtung ein Bewegen des Magnetkerns. Hierzu erfolgt insbesondere ein Bestromen der Spule, um eine Bewegung des Magnetkerns hervorzurufen. Der Hubmagnet und vorzugsweise der Magnetkern des Hubmagneten wirkt mit einer Auslöseeinrichtung zusammen. Die Auslöseeinrichtung dient zum Auslösen einer Hubeinrichtung des höhenverstellbaren Sattelrohrs. Bei der Hubeinrichtung kann es sich um eine bekannte herkömmliche Hubeinrichtung handeln, die beispielsweise eine mechanische Feder, wie eine Spiralfeder und/oder eine Pneumatikeinrichtung und/oder eine Hydraulikeinrichtung aufweist. Diese herkömmliche bekannte Hubeinrichtung funktioniert nun derart, dass aus einer oberen Sitzposition nach dem Öffnen einer Arretierung oder eines Ventils mit Hilfe des Körpergewichts der Sattel nach unten und somit das höhenverstellbare Sattelstützrohr zusammengeschoben wird. Hierbei erfolgt ein Speichern von Energie in Form von einer zusammengepressten Feder und/oder das Speichern von Energie in einer entsprechenden Hydraulik und/oder Pneumatikeinrichtung bzw. -kapsel. Die erfindungsgemäße Betätigungseinrichtung weist insbesondere den Vorteil auf, dass diese einerseits elektrisch ansteuerbar ist und insofern das Verlegen eines Bowdenzugs nicht erforderlich ist. Ferner weist das Verwenden eines Hubmagneten den wesentlichen Vorteil auf, dass dieser nur einen relativ kleinen Bauraum benötigt und insofern auch bei einer Größe, die zum Aufbringen der erforderlichen Kraft nötig ist, innerhalb des Sattelstützrohrs angeordnet werden kann. Vorzugsweise können in bevorzugter Ausführungsform durch einen derartigen Hubmagneten Kräfte von mehr als 20 N, insbesondere mehr als 30 N und gegebenenfalls auch mehr als 40 N erzeugt werden. Derartige Kräfte sind je nach Ausgestaltung der Hubeinrichtung, beispielsweise zum Öffnen des Ventils einer Pneumatik- und/oder Hydraulikeinrichtung nötig.

In einer besonders bevorzugten Ausführungsform ist zusätzlich zu dem Hubmagneten eine Vorspanneinrichtung vorgesehen. Die Vorspanneinrichtung ist hierbei vorzugsweise derart angeordnet, dass sie den Hubmagneten unterstützt. Insbesondere erfolgt durch die Vorspanneinrichtung ein Drücken des Hubmagneten in Richtung einer Auslöseeinrichtung, so dass vom Hubmagneten zum Betätigen der Auslöseeinrichtung nur noch eine geringere Kraft erforderlich ist. Diese beträgt in bevorzugter Ausführungsform weniger als 40 N oder gegebenenfalls sogar weniger als 30 N.

Durch die erfindungsgemäß besonders bevorzugte Ausführungsform der Kombination eines Hubmagneten zusammen mit einer unterstützenden Vorspanneinrichtung ist eine besonders kompakte Ausgestaltung einer entsprechenden erfindungsgemäßen Betätigungseinrichtung für ein höhenverstellbares Sattelstützrohr realisierbar. Es ist insbesondere möglich, einen Hubmagneten vorzusehen, der innerhalb des Sattelrohrs oder des Sattelstützrohrs angeordnet werden kann. Ein derartiger aufgrund des Bauraums in der Größe beschränkter Hubmagnet könnte für sich genommen die erforderliche Kraft zum Öffnen eines Ventils einer Pneumatik- und/oder Hydraulikeinrichtung nicht aufbringen. Durch die erfindungsgemäß in besonders bevorzugter Ausführungsform vorgesehene Vorspanneinrichtung kann die Kraft deutlich erhöht werden. Erst aufgrund der Addition, der durch den Hubmagneten und die Vorspanneinrichtung aufgebrachten Kraft, ist es möglich, bei geringem Bauraum eine Betätigungseinrichtung zu realisieren, durch die das entsprechende Ventil insbesondere mit geringer zeitlicher Verzögerung geöffnet werden kann.

Die Vorspanneinrichtung weist vorzugsweise eine Vorspannfeder auf oder ist als Vorspannfeder ausgebildet. Vorzugsweise handelt es sich hierbei um eine Spiralfeder, wobei es des Weiteren bevorzugt ist, dass die durch die Vorspanneinrichtung aufgebrachte Kraft parallel und insbesondere koaxial zu der vom Hubmagneten aufgebrachten Kraft ausgerichtet ist.

Vorzugsweise ist die Auslöseeinrichtung unabhängig davon, ob eine unterstützende Vorspanneinrichtung vorgesehen ist oder nicht, mit einer Stirnseite des Magnetkerns verbunden und liegt vorzugsweise an dieser an. Dies hat den Vorteil, dass eine Kraftübertragung von dem Magnetkern unmittelbar auf die Auslöseeinrichtung erfolgen kann. Die Auslöseeinrichtung kann stabförmig ausgebildet sein und erstreckt in besonders bevorzugter Ausführungsform in Längsrichtung des Magnetkerns bzw. in Kraftrichtung des Magnetkerns. Dies hat den Vorteil, dass die vom Magnetkern und gegebenenfalls der zusätzlich vorgesehenen Vorspanneinrichtung aufgebrachte Kraft, insbesondere vollständig auf die Auslöseeinrichtung übertragen wird und möglichst geringe Kraftverluste auftreten.

Sofern eine Vorspanneinrichtung, insbesondere in Form einer Vorspannfeder vorgesehen ist, ist es besonders bevorzugt, dass die Vorspanneinrichtung ebenfalls auf eine Stirnseite des Magnetkerns einwirkt. Insbesondere handelt es sich bei der Stirnseite, mit der die Vorspanneinrichtung zusammenwirkt, um diejenige Stirnseite, die der Stirnseite des Magnetkerns gegenüberliegt, die mit der Auslöseeinrichtung zusammenwirkt. Besonders bevorzugt ist es somit, dass die Längs- bzw. Kraftrichtung der Vorspanneinrichtung, die Längs- bzw. Kraftrichtung des Magnetkerns und die Längsrichtung der Auslöseeinrichtung parallel zueinander, insbesondere koaxial sind.

In einer bevorzugten Weiterbildung der Erfindung kann die Vorspanneinrichtung mit einer Einstelleinrichtung zum Einstellen einer Vorspannkraft verbunden sein. Hierdurch ist insbesondere sichergestellt, dass die Vorspanneinrichtung an Bauteilen, auf die die Kraft übertragen wird, stets anliegt. Dies dient zur Verhinderung von Geräuschen und verringert den Kraftverlust. Insbesondere kann die Vorspanneinrichtung als Schraube ausgebildet sein, bei einer vorzugsweise als Vorspannfeder ausgebildeten Vorspanneinrichtung auf diese in Längs- bzw. Kraftrichtung eine Vorspannkraft aufbringt.

Bei der bevorzugten Ausführungsform, bei der zusätzlich zum Hubmagneten eine Vorspanneinrichtung vorgesehen ist, ist es bevorzugt, dass zum Betätigen der Hubeinrichtung die erforderliche Kraft teilweise von der Vorspanneinrichtung und teilweise von dem Hubmagneten aufgebracht wird. Vorzugsweise werden von der Vorspanneinrichtung 20 bis 50 % der erforderlichen Kraft zum Auslösen der Hubeinrichtung aufgebracht.

Vorzugsweise ist der Hubmagnet zumindest teilweise, insbesondere vollständig innerhalb eines Gehäuses angeordnet. Das Gehäuse kann insbesondere derartig ausgebildet sein, dass zusätzlich auch die Vorspanneinrichtung zumindest teilweise insbesondere vollständig in diesem angeordnet ist.

Nach dem Bewegen des Magnetkerns in der Spule durch eine entsprechende Auslösung mit Hilfe der elektrischen Schalteinrichtung, erfolgt vorzugsweise ein Bewegen des Magnetkerns bis zu einer Auslöseposition. Dies ist die Position, in der ein Auslösen der Hubeinrichtung des höhenverstellbaren Sattelstützrohrs sichergestellt ist. Um eine eindeutige Definition dieser Auslöseposition zu gewährleisten, ist vorzugsweise ein Anschlag für den Magnetkern vorgesehen. Ein entsprechender Anschlag kann mit dem Gehäuse verbunden oder auch einstückig mit diesem ausgebildet sein.

Nachfolgend wird die Erfindung anhand einer bevorzugten Ausführungsform unter Bezugnahme auf die anliegenden Zeichnungen näher erläutert.

Es zeigen:
- Figur 1: eine schematische Schnittansicht einer erfindungsgemäßen Betätigungseinrichtung für ein höhenverstellbares Sattelstützrohr und
- Figur 2: eine schematische Schnittansicht einer als Pneumatikeinrichtung ausgebildeten Hubeinrichtung des höhenverstellbaren Sattelstützrohrs.

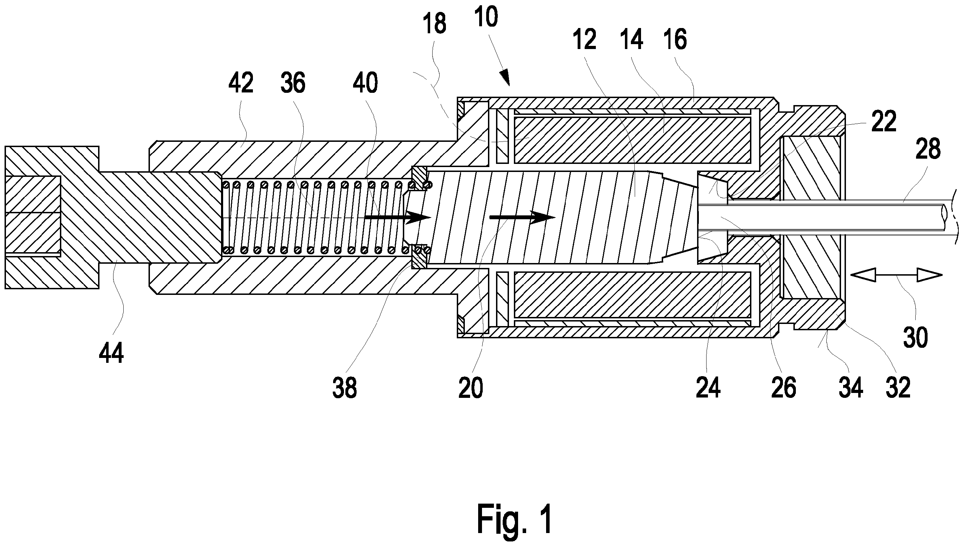

Die erfindungsgemäße Betätigungseinrichtung für ein höhenverstellbares Sattelstützrohr weist einen Hubmagneten 10 auf. Dieser umfasst einen Magnetkern 12 sowie eine den Magnetkern 12 umgebende elektrische Spule 14. Der Hubmagnet 10 ist in einem Gehäuse 16 angeordnet. Ferner ist der Hubmagnet 10 über eine gestrichelt dargestellte elektrische Leitung 18 mit einem insbesondere am Lenker angeordneten Schalter verbunden, so dass die Leitung 18 Teil der Schalteinrichtung ist. Mit Hilfe der Schalteinrichtung kann die Spule 14, die ferner mit einer Stromquelle verbunden ist, bestromt werden, um eine Magnetkraft zu erzeugen. Bei eingeschalteter Schalteinrichtung wird der Magnetkern 12 aus der in Figur 1 dargestellten Ruhestellung in Richtung eines Pfeils 20 in eine Auslöseposition verschoben.

Das Gehäuse 10 ist im dargestellten Ausführungsbeispiel topfartig angeordnet und umschließt auf der rechten Seite in Figur 1 die Spule. Hierdurch ist ein als kegelstumpfförmige Öffnung ausgebildeter Anschlag 22 ausgebildet. In diesem Anschlag 22 wird der Magnetkern 20 bewegt und verbindet sich sodann in der angeschlagenen Position in der Auslöseposition.

An einer in Figur 1 rechten Stirnseite 24 des Magnetkerns liegt ein stiftförmiges Element 26 einer Auslöseeinrichtung an. Das stiftförmige Element 26 ist in einem Rohr 28 in Längsrichtung 30 geführt. Das Bewegen des Magnetkerns 12 in Richtung des Pfeils 20 in die Auslöseposition bewirkt somit ein Bewegen des stiftförmigen Elements 26 in Figur 1 nach rechts ebenfalls in die Auslöseposition.

Die Stirnseite 24 des Magnetkerns 12 ist die in Richtung der Hubeinrichtung des höhenverstellbaren Sattelstützrohrs weisende Stirnseite. In montiertem Zustand weist die Stirnseite im Wesentlichen nach oben.

Das Gehäuse 10 weist an einem zylindrischen Ansatz 32 ein Außengewinde 34 auf. Mit Hilfe des Außengewindes 34 kann eine Verbindung der Betätigungseinrichtung mit einem Rohr des höhenverstellbaren Sattelstützrohrs erfolgen. Insbesondere handelt es sich hierbei um die Verbindung mit einem äußeren Rohr eines insbesondere zwei teleskopartig ineinander verschiebbare Rohre aufweisenden Sattelstützrohrs. Das äußere Rohr ist stationär und fest mit dem Sattelrohr des Rahmens verbunden.

In der dargestellten bevorzugten Ausführungsform ist zur Unterstützung des Hubmagneten 10 eine Vorspanneinrichtung in Form einer Vorspannfeder 36 vorgesehen. Die Vorspannfeder 36 wirkt mit einer der Stirnseite 24 gegenüberliegenden Stirnseite 38 des Magnetkerns 12 zusammen. Die Vorspannfeder 36 erzeugt eine Kraft 40, die koaxial zur Längs- bzw. Kraftrichtung 20 des Magnetkerns 12 gerichtet ist. Ein Ansatz 42 des Gehäuses 10 umgibt die Vorspannfeder 36, so dass die Vorspannfeder 36 in einer zylindrischen Ausnehmung des Ansatzes 42 angeordnet ist.

Auf der dem Magnetkern 12 abgewandten Seite der Vorspannfeder 36 ist eine Einstelleinrichtung 44 angeordnet. Bei der Einstelleinrichtung 44 handelt es sich im dargestellten Ausführungsbeispiel um eine Schraube, durch die ein Vorspannen der Feder 36 erfolgen kann. Hierdurch ist gewährleistet, dass die Feder 36 über den Magnetkern 12 auch in der Ruheposition, d.h. in der unbestromten Position stets seine Kraft auf den Pin 26 und somit auf die Auslöseeinrichtung zum Auslösen der Hubeinrichtung ausübt. Die von der Vorspannfeder 36 aufgebrachte Kraft addiert sich zu der vom Magnetkern 12 aufgebrachten Kraft beim Betätigen der Auslöseeinrichtung.

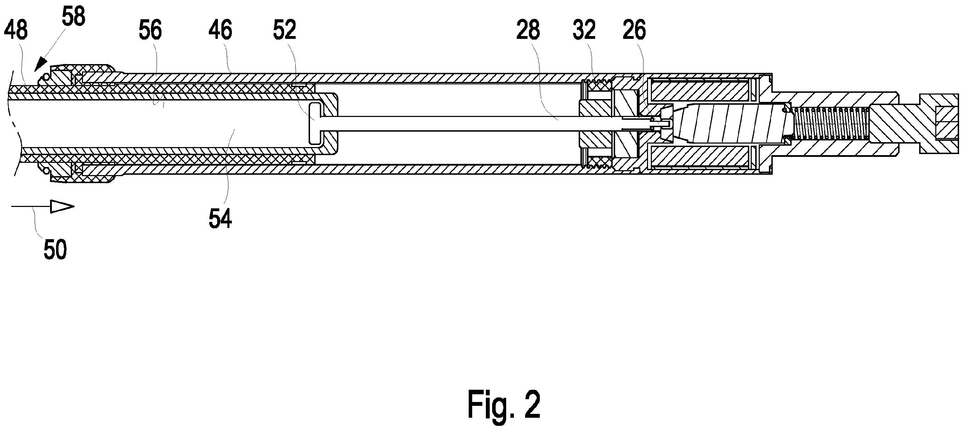

Bei der Auslöseeinrichtung kann es sich um eine pneumatische Einrichtung, wie in Figur 2 dargestellt, handeln.

Diese weist ein äußeres Sattelstützrohr 46 auf, das über einen nicht dargestellten Klemmmechanismus im Sattelrohr des Rahmens klemmend fixiert wird. Je nach Größe des Benutzers kann das Sattelstützrohr 46 in unterschiedlichen Positionen im Sattelrohr des Fahrradrahmens fixiert werden. Mit dem äußeren Sattelstützrohr 46 ist ein inneres Sattelstützrohr 48 verbunden, das aus der in Figur 2 dargestellten ausgefahrenen Position zur Höhenverstellung in dem äußeren Sattelstützrohr 46 in Richtung eines Pfeils 50 verschoben werden kann. Hierdurch ist es möglich, nach Betätigen einer Auslöseeinrichtung 26 mit Hilfe des Körpergewichts das äußere Sattelstützrohr 48 in Richtung des Pfeils 50 zu bewegen. Das Rohr 28 ist hierbei ortsfest und wird nicht bewegt und weist an den in Richtung des äußeren Sattelstützrohrs 48 weisenden Ende ein tellerförmiges Element 52 ähnlich eines Kolbens auf. Beim Bewegen des äußeren Sattelstützrohrs 48 in Richtung des Pfeils 50 erfolgt somit ein Komprimieren der Luft innerhalb eines Hohlraums 54 einer in dem äußeren Sattelstützrohr angeordneten Kartusche 56.

Um einen mit einem oberen Ende 58 des äußeren Sattelstützrohrs 48 verbunden Sattel wieder in die obere Sitzposition zu verschieben, wird, wie vorstehend beschrieben, das stiftförmige Element 56 mit Hilfe des Hubmagnets 10 bewegt. Hierdurch wird ein sich in dem tellerförmigen Element 52 befindendes Ventil geöffnet.

## Patentansprüche

1. Betätigungseinrichtung für ein höhenverstellbares Sattelstützrohr, mit
einem Hubmagneten (10) mit einer einen Magnetkern (12) umgebenden Spule (14),
einer mit der Spule (14) verbundenen elektrischen Schalteinrichtung (18) und
einer mit dem Magnetkern (12) zusammenwirkenden Auslöseeinrichtung (26) zum Auslösen einer Hubeinrichtung des höhenverstellbaren Sattelstützrohrs.

2. Betätigungseinrichtung nach Anspruch 1, **dadurch gekennzeichnet, dass** die Auslöseeinrichtung mit einer Stirnseite (24) des Magnetkerns (12) verbunden ist, insbesondere an dieser anliegt.

3. Betätigungseinrichtung nach Anspruch 1 oder 2, **dadurch gekennzeichnet, dass** die Auslöseeinrichtung (26) stabförmig ausgebildet ist und sich insbesondere in Längsrichtung (20) des Magnetkerns (12) erstreckt.

4. Betätigungseinrichtung nach einem der Ansprüche 1 bis 3, **gekennzeichnet durch** einen Anschlag (22) für den Magnetkern (12) in einer Auslöseposition.

5. Betätigungseinrichtung nach einem der Ansprüche 1 bis 4, **dadurch gekennzeichnet, dass** der Hubmagnet (10) zumindest teilweise in einem Gehäuse (16) angeordnet ist, wobei der Anschlag (22) vorzugsweise mit dem Gehäuse (16) verbunden, insbesondere einstückig ausgebildet ist.

6. Betätigungseinrichtung nach einem der Ansprüche 1 bis 5, **gekennzeichnet durch** eine auf den Magnetkern (12) einwirkende Vorspanneinrichtung, insbesondere eine Vorspannfeder (36).

7. Betätigungseinrichtung nach Anspruch 6, **dadurch gekennzeichnet, dass** die Vorspanneinrichtung (36) auf eine Stirnseite (38) des Magnetkerns (12) einwirkt, insbesondere an dieser anliegt.

8. Betätigungseinrichtung nach einem der Ansprüche 2 bis 6, **dadurch gekennzeichnet, dass** die mit der Auslöseeinrichtung (26) zusammenwirkende Stirnseite (24) des Magnetkerns (12) der mit der Vorspanneinrichtung (36) zusammenwirkende Stirnseite (38) gegenüberliegt.

9. Betätigungseinrichtung nach einem der Ansprüche 6 bis 8, **dadurch gekennzeichnet, dass** die Vorspanneinrichtung (36) mit einer Einstelleinrichtung (44) zur Einstellung einer Vorspannkraft verbunden ist.

10. Betätigungseinrichtung nach einem der Ansprüche 1 bis 9, **dadurch gekennzeichnet, dass** eine zum Betätigen der Hubeinrichtung erforderliche Kraft teilweise von der Vorspanneinrichtung (36) und teilweise vom Hubmagneten (10) aufgebracht wird.

11. Betätigungseinrichtung nach einem der Ansprüche 1 bis 10, **dadurch gekennzeichnet, dass** die Hubeinrichtung eine Pneumatikeinrichtung und/oder eine Hydraulikeinrichtung und/oder eine Federeinrichtung aufweist.
